Europäisches Patentamt

(19) **European Patent Office**

Office européen des brevets

(11) Numéro de publication: **0 075 780**
**B1**

(12) # FASCICULE DE BREVET EUROPEEN

(45) Date de publication du fascicule du brevet:
**10.07.85**

(51) Int. Cl.⁴: **H 04 Q 3/54**, H 04 Q 11/04

(21) Numéro de dépôt: **82108459.7**

(22) Date de dépôt: **14.09.82**

(54) **Dispositif de défense d'un autocommutateur à commande répartie.**

(30) Priorité: **18.09.81 FR 8117644**

(43) Date de publication de la demande:
**06.04.83 Bulletin 83/14**

(45) Mention de la délivrance du brevet:
**10.07.85 Bulletin 85/28**

(84) Etats contractants désignés:
**BE CH DE FR GB IT LI NL SE**

(56) Documents cités:
**EP - A - 0 062 296**
**EP - A - 0 075 247**
**EP - A - 0 075 248**

**IEEE FOURTH INTERNATIONAL CONFERENCE ON SOFTWARE ENGINEERING FOR TELECOMMUNICATION SWITCHING SYSTEMS, juillet 1981, pages 124-129, Warwynck (GB); M. MAISONNEUVE et al.: "E10S operating system for a distributed architecture"**
**INTERNATIONAL CONFERENCE ON COMMUNICATIONS, vol. 3, 8-12 juin 1980, pages 46.5.1-46.5.7; Seattle, WA. (USA); W. GUILARTE et al.: "Maintenance advantages for a distributed system"**
**TELECOM REPORT BEIHEFT "DIGITALVERMITTLUNGSSYSTEM EWSD", vol. 4, 1981, pages 13-18, MÜNCHEN (DE); H. EBERDING: "Die Software im System EWSD"**

(73) Titulaire: **COMPAGNIE INDUSTRIELLE DES TELECOMMUNICATIONS CIT-ALCATEL S.A. dite:,**
**12, rue de la Baume, F-75008 Paris (FR)**

(72) Inventeur: **Khimeche, Abdel Cader, 1, rue du Poisson Bleu, F-92290 Chatenay Malabry (FR)**
Inventeur: **Kemler, Marc, 1, rue Morte Bouteille, F-78140 Velizy Villacoublay (FR)**

(74) Mandataire: **Weinmiller, Jürgen et al, Zeppelinstrasse 63, D-8000 München 80 (DE)**

(56) Documents cités: (suite)
**INTERNATIONAL SWITCHING SYMPOSIUM, 25-29 octobre 1976, pages 423.3.1-423.3.8, Kyoto (JP); K.E. WURHMANN: "Corrective maintenance in the integrated PCM telecommunications system IFS-1"**
**INTERNATIONAL SWITCHING SYMPOSIUM, 11 mai 1979, pages 970-977, Paris (FR); J.A. BRAKEL et al.: "Aspects structurels de la gestion centrale de plusieurs processeurs TCP 36 d'un système de commutation téléphonique"**
**GEC JOURNAL OF SCIENCE & TECHNOLOGY, vol. 45, no. 3 1979, pages 116-122, Coventry (GB); J.C.D. NISSEN: "A fault-tolerant multimicroprocessor for telecommunications and general applications"**
**INTERNATIONAL SWITCHING SYMPOSIUM, 11 mai 1979, pages 608-614, Paris (FR); F.ANCEAU et al.: "Projet d'architecture pour la commande d'un autocommutateur téléphonique"**
**COMMUTATION & TRANSMISSION, vol. 3, no. 3 septembre 1981, pages 99-112, Paris (FR); M. BALLARD et al.: "Le programme E10.S-TSS.5"**

**0 075 780**

## Description

L'invention concerne un dispositif de défense d'un autocommutateur à commande répartie. Elle est applicable en particulier dans les industries des télécommunications et de la télématique.

L'évolution technologique de l'industrie des télécommunications, liée à celle de l'électronique intégrée et à celle de l'informatique, a entraîné un développement très rapide des services aux utilisateurs et des moyens à la disposition du personnel d'exploitation des autocommutateurs. L'augmentation de la fiabilité des composants et le développement des moyens de test ont conduit à rechercher des dispositifs de défense capables d'augmenter la qualité de service et de réduire les interventions urgentes et la fréquence des interventions d'entretien normal du matériel.

Une défense efficace nécessite des moyens de détection rapide des fautes et de réaction rapide du système, par exemple par basculement sur organe de secours, des moyens de localisation précise des organes incriminés, et des moyens permettant l'action efficace du personnel d'intervention: interfaces de signalisation, moyens d'aide à la réparation.

Dans le cas des autocommutateurs à commande par calculateur central, technique la plus développée dans les années 70, la défense est également centralisée: calculateur dupliqué, redondance des organes auxiliaires et du réseau de connexion, moyens spécifiques de test et de signalisation de la partie téléphonique pilotés par le calculateur.

On connaît aujourd'hui les avantages des systèmes à commande répartie, avantages dûs en particulier à l'évolution des microprocesseurs et des logiciels.

Une difficulté se présente lorsque l'on cherche un dispositif de défense bien adapté à un système à commande répartie sans perdre aucun des avantages de souplesse d'utilisation et de modularité de celui-ci.

En effet dans les systèmes répartis d'une capacité de plusieurs milliers de lignes, il est nécessaire d'avoir deux niveaux de commande par microprocesseurs: un premier niveau dans lequel un processeur supervise quelques terminaux ou quelques dizaines de terminaux, et un second niveau concernant quelques centaines ou milliers de terminaux, et assurant par exemple l'acheminement, la taxation et l'exploitation. Or, un autocommutateur modulaire comporte nécessairement un certain nombre de blocs ou groupes d'équipements, et le deuxième niveau de commande peut être soit intégré à ces groupes, soit extérieur et dans ce cas un processeur de ce niveau n'est pas nécessairement affecté rigidement à un groupe.

Dans le cas ou le deuxième niveau est intégré à ces groupes, la défense peut être aisément organisée localement. Un système de ce type est décrit par exemple dans la demande de brevet français n° 2 420 262. Un inconvénient de cette solution provient du fait qu'il est nécessaire de dupliquer les processeurs du deucième niveau.

Un système à deux niveau de commande dans lequel le deuxième niveau n'est pas intégré aux modules est décrit dans l'article de SHIMASAKI intitulé »A versatile digital switching system for central office NEAX 61« (Proceedings du colloque ISS 79—7 au 11 mai 1979, Paris) tome 2, pages 688 à 695. Ce système permet une défense répartie associée à une maintenance centralisée. Cependant un tel système a encore des inconvénients sur le plan de la défense car il nécessite des liaisons spécifiques entre les deux niveaux, et d'autre part les processeurs du deuxième niveau ne sont pas banalisés, ce qui nécessite leur duplication.

Un autre système à deux niveaux est décrit dans la demande européenne EP-A-0 062 296, qui n'a pas été publiée avant la date de dépôt de la présente demande. Dans cette demande antérieure, un autocommutateur comporte un réseau de connexion temporel constitué de commutateurs, des groupes d'unités de terminaux constitués par des unités de terminaux comportant chacune un microprocesseur de gestion des terminaux et reliées au réseau de connexion par des liaisons multiplex, des périphériques, un ensemble de commande comportant des unités de commande banalisées et des unités de commande de périphériques reliées entre elles par deux liaisons point par point, les unités de commande étant reliées au réseau de connexion par des liaisons multiplex, et des marqueurs pour la commande du réseau de connexion, chaque unité de commande, chaque unité de commande de périphérique, et chaque marqueur comportant un microprocesseur; dans l'autocommutateur chaque unité de commande, chaque unité de commande de périphérique, chaque liaison point à point, chaque commutateur, chaque liaison multiplex, chaque unité de terminaux, chaque terminal et chaque périphérique constitue un bloc de sécurité susceptible d'être isolé séparément.

Le but de l'invention est de réaliser un dispositif de défense, appliqué à un autocommutateur du type indiqué ci-dessus et décrit dans la demande de brevet européen EP-A-0 062 296, et n'enlevant à celui-ci aucune de ses caractéristiques de modularité et de souplesse.

L'invention a pour objet un dispositif d'un autocommutateur à commande répartie comportant un réseau de connexion temporel constitué de commutateurs, des groupes d'unités de terminaux dans lesquels chaque unité de terminaux comportant des terminaux est reliée au réseau de connexion par des liaisons multiplex et comporte un microprocesseur de gestion des terminaux, des périphériques tels que disques, terminaux de dialogue dérouleurs de bandes magnétiques, liaisons de données par l'intermédiaire de modems, un ensemble de commande comportant des unités de commande banalisées et des unités de commande de périphériques, reliées entre elles par deux liaisons point à point,

2

**0 075 780**

les unités de commande étant reliées au réseau de connexion par des liaisons multiplex, et des marqueurs pour la commande du réseau de connexion, chaque unité de commande, chaque unité de commande de périphérique et chaque marqueur comportant un microprocesseur, chaque unité de commande de périphérique, chaque unité de commande, chaque liaison point à point, chaque commutateur, chaque liaison multiplex, chaque unité de terminaux, chaque terminal et chaque périphérique constituant un bloc de sécurité susceptible d'être isolé séparément, caractérisé par le fait qu'il est organisé en 3 niveaux:

— un premier niveau ayant des moyens de défense dans chaque microprocesseur permettant la détection des pannes et une prise de décision concernant le traitement en cours,
— un deuxième niveau ayant des moyens de gestion des blocs de sécurité assurant le basculement d'un bloc de sécurité sur un autre, et la reconfiguration des liaisons,
— un troisième niveau ayant des moyens de gestion des microprocesseurs de l'ensemble de commande et des marqueurs, et des deux liaisons point à point, lesdits moyens comportant deux unités de commande de périphérique identiques ayant en mémoire de masse tout le logiciel de l'autocommutateur.

L'invention à également pour objet un dispositif de défense dans lequel le logiciel est organisé en machines logiques reconfigurables gérées par les moyens de gestion du troisième niveau, caractérisé par le fait que les fonctions de signalisation des pannes sont centralisées dans une machine logique de maintenance MLM qui reçoit des messages des moyens de gestion du deuxième niveau, et émet des messages d'édition de la signalisation.

Un mode de réalisation préférentiel de l'invention va être décrit à titre d'exemple. L'architecture décrite concerne un auto commutateur pour applications télématiques, mais certains détails de l'exemple donné concernent plus particulièrement un autocommutateur téléphonique.

Les figures annexées représentent:

Figure 1 le diagramme général d'un autocommutateur à architecture répartie, de l'invention,
Fig. 2 une unité de terminaux d'abonnes,
Fig. 3 le schéma de principe d'un module de distribution de base de temps,
Fig. 4 le schéma de principe d'un circuit de base de temps pour groupe d'unités de terminaux,
Fig. 5 une unité de commande banalisée,
Fig. 6 une unité de commande de périphériques,
Fig. 7 un exemple de répartition du logiciel,
Fig. 8 un diagramme général d'organisation de la défense,
Fig. 9 un schéma montrant la répartition des tâches de défense.

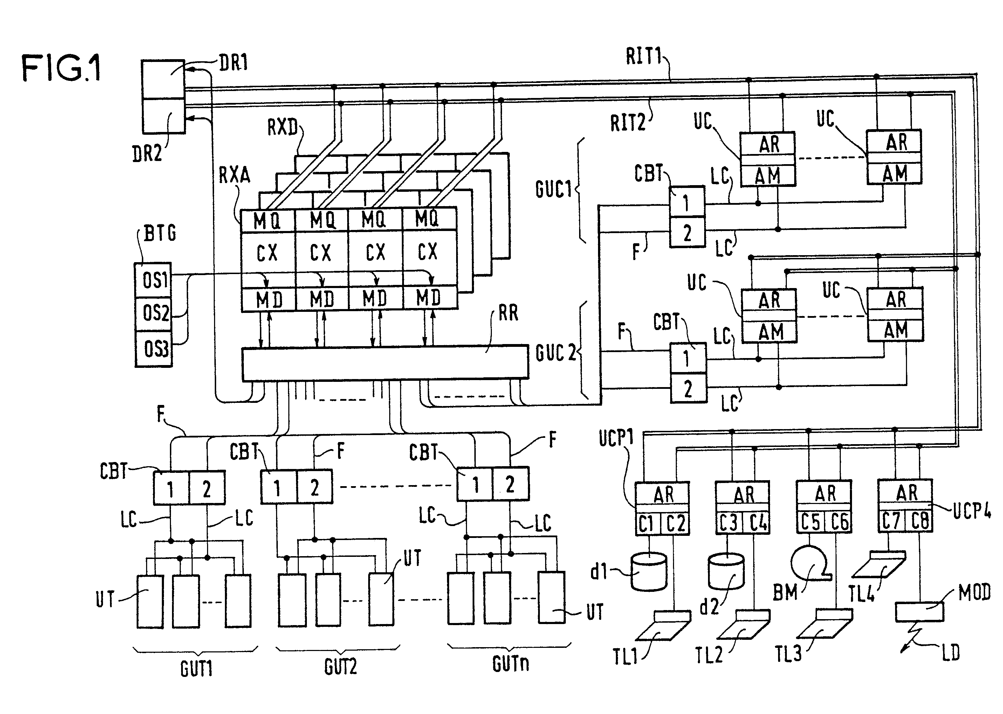

L'autocommutateur à réseau de connexion temporel représenté de manière simplifiée à la figure 1, comporte les organes suivants:

— Des groupes d'unités de terminaux GUT 1 à GUTn comportant des unités UT de terminaux d'abonnés, de circuits analogiques et numériques, de terminaux auxiliaires de signalisation, d'émission de tonalités et de films parlants, d'essais de lignes d'abonnés et de circuits, de circuits de conférence, etc. . .
— Un réseau de connexion central à un seul étage de commutation, organisé en plans indépendants, par exemple quatre plans indépendants, par exemple quatre plans $RX_A$ à $RX_D$. Les chiffres donnés ici et dans la suite sont de simples destinés à préciser un mode de réalisation ou à simplifier la représentation.
— Un ensemble de commande à architecture répartie formé de groupes d'unités de commande $GUC_1$, $GUC_2$ constitués chacun d'unités des commandes UC identiques, comportant chacune un microprocesseur. Ces unités de commande sont banalisées. L'ensemble de commande comporte aussi une, ou plusieurs, unités de commande de périphériques $UCP_1$ à $UCP_4$; ces unités peuvent être identiques aux précédentes, mais elles ne sont pas banalisées complètement du fait qu'elles comportent des coupleurs $C_1$, $C_2$, ... $C_8$, de liaison avec les périphériques: Disques $d_1$, $d_2$; terminaux de dialogue $TL_1$ à $TL_4$; des dérouleurs de bande magnétique BM; liaisons de données LD par l'intermédiaire des modems MOD).

Les liaisons qui interconnectent ces organes sont les suivantes:

— Les unités de terminaux UT sont reliées à chaque plan $RX_A$ à $RX_D$ du réseau de connexion par une liaison multiplex, duplex, par exemple une liaison multiplex à 32 voies de 8 e. b. Il y a donc quatre liaisons multiplex et les unités de terminaux UT d'un même groupe sont reliées en parallèle aux quatre liaisons multiplex.
— Les unités de commande UC sont également reliees au réseau de connexion par des liaisons multiplex, à raison d'une liaison par groupe de commande GUC vers chaque plan. Les messages échangés entre unités de commande UC et unité de terminaux UT empruntent des voies temporelles des liaisons multiplex reliées par le réseau de connexion d'une manière semi-permanente et reconfigurable. On réalise ainsi des canaux de transmission de données d'un débit de 64 keb/s qui sont utilisés suivant une procédure du type HDLC, définie par le CCITT, norme 150.

— Les unités de commande UC et de commande de périphériques UCP sont reliées entre elles par une liaison point, doublée pour des raisons de sécurité, $RIT_1$, $RIT_2$. Il s'agit d'une liaison série utilisant également une procédure HDLC. L'accès à la liaison est géré par un distributeur, $DR_1$, $DR_2$, respectivement qui délivre les autorisations d'émission et supervise la durée d'utilisation.

Chaque liaison $RIT_1$ et $RIT_2$ comporte cinq paires de fils vers chaque station raccordée, assurant les fonctions d'appel, d'autorisation d'accès, d'horloge, d'émission et de réception. Sur chaque paire les signaux sont transmis en mode bipolaire.

Chaque plan $RX_A$ à $RX_D$ du réseau de connexion central, comporte par exemple quatre commutateurs temporels CX associés chacun à un marqueur MQ et un à module de distribution de signaux MD; chaque marqueur MQ comporte un microprocesseur; les marqueurs sont pilotés par les unités de commande UC, par l'intermédiaire des liaisons point à point $RIT_1$, $RIT_2$.

Toutes les unités cités plus haut UT, UC, UCP, MQ disposent d'un circuit ER d'émission/réception de messages de type HDLC, par exemple de circuits de type MC 6854 de la société MOTOROLA ou 8273 de la société INTEL.

Des coupleurs AR, permettent l'accès des unités de commande UC et des unités de commande de périphériques UCP aux liaisons $RIT_1$ et $RIT_2$ et des coupleurs AM permettent l'accès aux unités de commande UC aux canaux MIC; les coupleurs AR et AM permettant un accès en mode sémaphore et sont par exemple du type décrit dans le document EP 62 296 A1 déjà cité.

Pour les unités de terminaux, il faut egalement disposer d'un étage de commutation dans chaque unité de terminaux UT pour permettre de connecter un terminal quelconque à une voie temporelle de l'une quelconque des liaisons multiplex qui desservent cette unité.

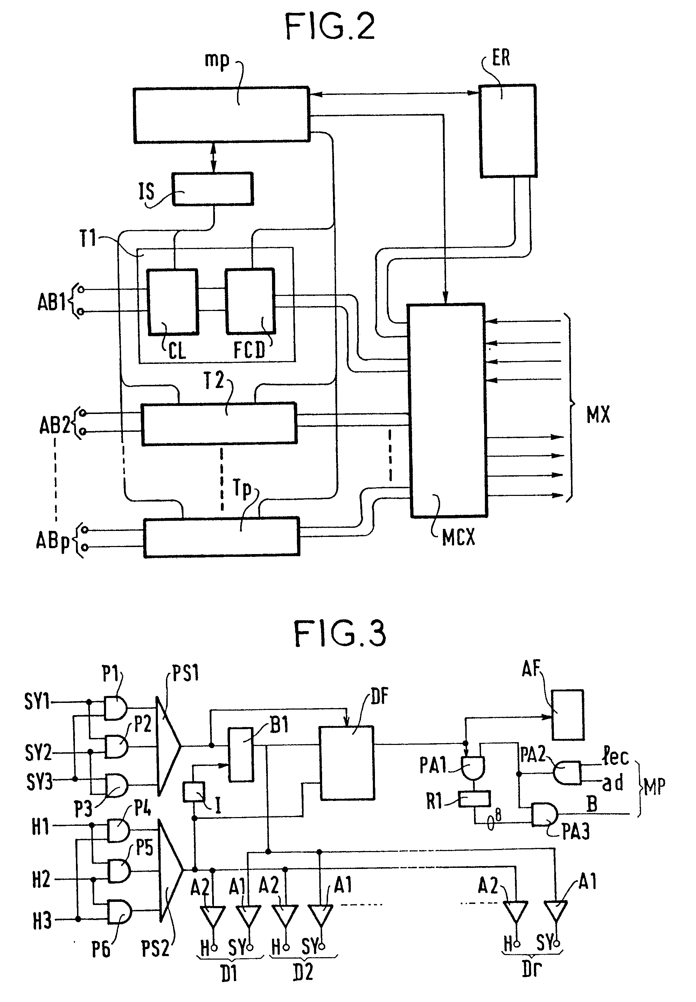

Un exemple d'unité de terminaux d'abonnés est montré à la figure 2. Chaque terminal $T_1$ à $T_p$ est formé d'un circuit de ligne CL, comportant des moyens d'alimentation, de protection, de supervision de boucle et d'injection de sonnerie, et d'un circuit FCD de filtrage et de codage analogique/numérique (CODEC). Chaque terminal est relié à un abonné $AB_1$ à $AB_p$, respectivement.

L'unité de terminaux est pilotée par un microprocesseur mp relié à quatre liaisons multiplex MX par un circuit d'émission/réception ER. L'étage de commutation est dans cet exemple une matrice d'aiguillage MCX de type spatial, reliée par les liaisons multiplex MX aux plans $RX_A$ à $RX_D$ du réseau de connexion.

L'aiguillage temporel est réalisé au niveau des circuits de filtrage et de codage par synchronisation sur la voie choisie, sous commande du microprocesseur. Celui-ci pilote également les circuits de ligne CL par l'intermédiaire d'un interface IS de supervision et de commande.

Pour des raisons de défense et de modularité, les liaisons entre le réseau de connexion central et les groupes d'unités de terminaux GUT et de commande GUC sont organisées en faisceaux F (figure 1), chaque faisceau regroupant deux liaisons multiplex, une liaison de distribution d'horloge et une liaison de synchronisation comme décrit et revendiqué dans la demande EP 75 248 profitant de la même date de priorité que la présente demande.

Les faisceaux F sont reliés figure 1 au répartiteur RR du réseau de connexion, et, dans chaque groupe d'unités de terminaux GUT et de commande GUC, à un circuit d'horloge et de synchronisation CBT, dupliqué.

Chaque groupe d'unités est relié par deux faisceaux F distribuant les quatre liaisons multiplex d'accès aux quatre plans du réseau de connexion.

Chaque circuit d'horloge de synchronisation CBT distribue l'ensemble des signaux de temps aux unités du groupe, par une liaison commune LC dupliquée, comportant deux liaisons multiplex.

Une base de temps générale BTG est formée de trois oscillateurs $OS_1$, $OS_2$, $OS_3$; elle est par exemple du type décrit dans le brevet français no 2 390 856 de la demanderesse.

Chaque oscillateur délivre un signal d'horloge $H_1$, $H_2$, $H_3$, ainsi qu'un signal de synchronisation de trame $SY_1$, $SY_2$, $SY_3$ d'une fréquence égale à la fréquence de trame des liaisons multiplex.

La distribution synchrone des signaux d'horloge et de synchronisation à l'ensemble des organes du central est réalisée par les modules de distribution de signaux MD, figure 1 que effectuent un choix majoritaire des couples de signaux et de synchronisation reçus des trois oscillateurs, un contrôle de faute, et une distribution vers r destinataires, via r liaisons, D1 à Dr, par module.

La figure 3 montre un exemple de module de distribution de signaux MD. Les signaux de synchronisation $SY_1$, $SY_2$, $SY_3$ et d'horloge $H_1$, $H_2$, $H_3$ des trois oscillateurs sont reçus par deux circuits de choix majoritaires, respectivement, formés chacun de trois portes ET, et d'une porte OU, portes ET-$P_1$, $P_2$, $P_3$ et porte OU PS1 pour les signaux de synchronisation, portes ET-$P_4$, $P_5$, $P_6$ et porte PS2 pour les signaux d'horloge.

La porte OU-PS1 alimente des amplificateurs $A_1$ à travers une bascule B1 activée par le front descendant du signal majoritaire issu de la porte OU-PS 2 via l'inverseur I. Un détecteur de faute DF relié à la sortie des portes OU-PS1, PS2 et de la bascule B1, et à l'entrée d'un afficheur AF, permet de signaler les fautes de distribution. Naturellement les oscillateurs ont leur propre moyen de détection de fautes. Un registre d'échanges R1 et des portes ET d'accès PA1 à PA3 permettent la supervision du module de distribution de signaux MD par un microprocesseur MP associé. La porte ET-PA2 reçoit un signal de lecture lec et une adresse ad du microprocesseur MP; la porte ET-PA3 est reliée en sortie au bus B du microprocesseur MP. La porte OU-PS2 alimente des amplificateurs A2 qui délivrent des signaux d'horloge H, les amplificateurs A1 délivrant des signaux de synchronisation SY. Chaque liaison D1 à Dr comporte un signal d'horloge et un signal de synchronisation. Dans une réalisation préférée, les modules de distribution de signaux MD sont situés dans les alvéoles du réseau de connexion, et la supervision est faite par les microprocesseurs des marqueurs.

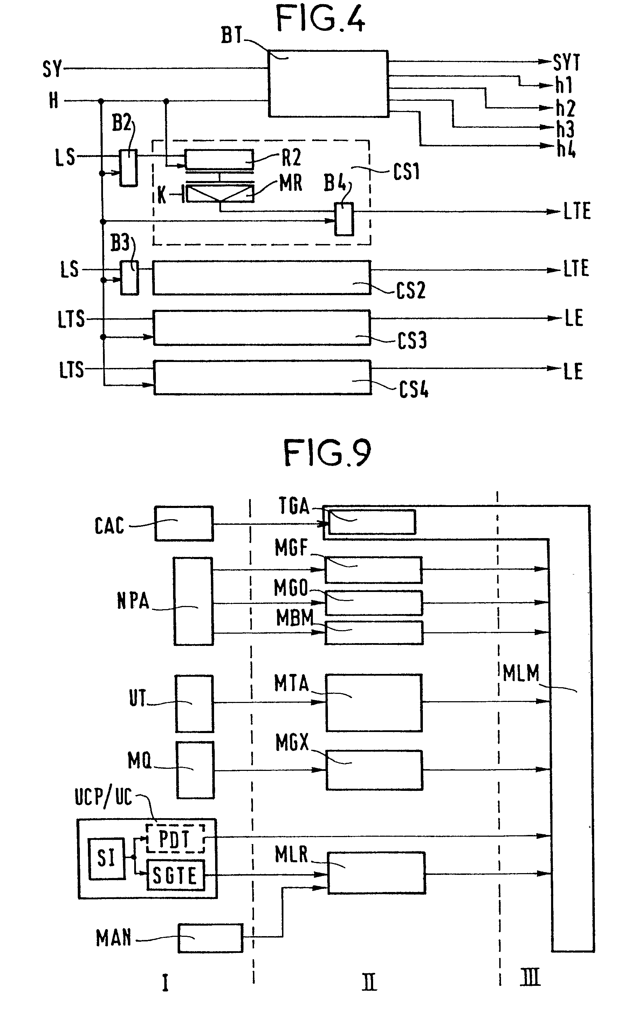

Au niveau d'un groupe d'unités de terminaux GUT, chaque circuit d'horloge et de synchronisation CBT est relié à un module de distribution de signaux MD et à deux liaisons multiplex MX soit en fait à deux liaisons sortantes LS et deux liaisons entrantes LE, comme décrit et revendiqué dans la demande EP 75 147 profitant de la même date de priorité que la présente demande. Les deux circuits d'horloge et de synchronisation CBT d'un groupe sont reliés à des plans différents de réseau de connexion et à des modules de distribution de signaux MD indépendants. Ces circuits d'horloge et de synchronisation CBT comportent comme représenté figure 4 un circuit de base de temps interne BT, qui élabore les signaux de synchronisation SYT et les signaux d'horloge h1 à h4 nécessaires aux unités de terminaux UT, ainsi que des circuits de synchronisation CS1 à CS4 des liaisons multiplex.

Les circuits de synchronisation CS1 et CS2 sont insérés entre les deux liaisons multiplex sortantes LS et les deux liaisons multiplex entrantes de terminaux LTE. Les circuits de synchronisation CS3 et CS4 sont insérés entre les deux liaisons multiplex de sortie de terminaux LTS et les deux liaisons entrantes LE.

En outre les liaisons sortantes LS sont échantillonnées par des bascules B2 et B3 pilotées par les signaux d'horloge H.

Les circuits de synchronisation CS sont formés d'un registre tampon R2, d'un multiplexeur MR dont l'adresse K est câblée de manière à introduire un déphasage constant, qui dépend du type d'unités de terminaux du groupe concerné, et d'une bascule de sortie B4.

Deux faisceaux supplémentaires F fournissent à partir du répartiteur RR les signaux d'horloge H et de synchronisation SY aux distributeurs DR1 et DR2 pour leur permettre l'élaboration des signaux d'horloge des liaisons point à point RIT qui relient les unités de commande UC.

Les deux faisceaux F desservant un même organe sont complètement indépendants, car leurs liaisons proviennent de plans différents. En outre les modules correspondants sont desservis par des alimentations distinctes.

Le choix du faisceau actif peut être réalisé indépendamment par le microprocesseur de chaque unité de terminaux. Celui-ci possède en effet son propre oscillateur.

Supposons par exemple qu'un groupe d'unités de terminaux GUT soit supervisé par une inuté de commande UC qui effectue une exploration cyclique de toutes les unités de terminaux UT qu'elle supervise. Une panne quelconque du faisceau actif sera détectée par les unités UT qui ne recevront plus de signaux d'exploration et qui alors changeront de faisceau actif et de canal de liaison avec l'unité de commande UC. Cette unité de commande UC aura connaissance du changement en identifiant le canal sur lequel elle recevra la réponse à son exploration.

Ces principes sont appliqués à tous les types d'unités de terminaux: abonnés, circuits, auxiliaires de signalisation, de distribution de tonalité et de machines parlantes, unités d'essais de lignes et de joncteurs.

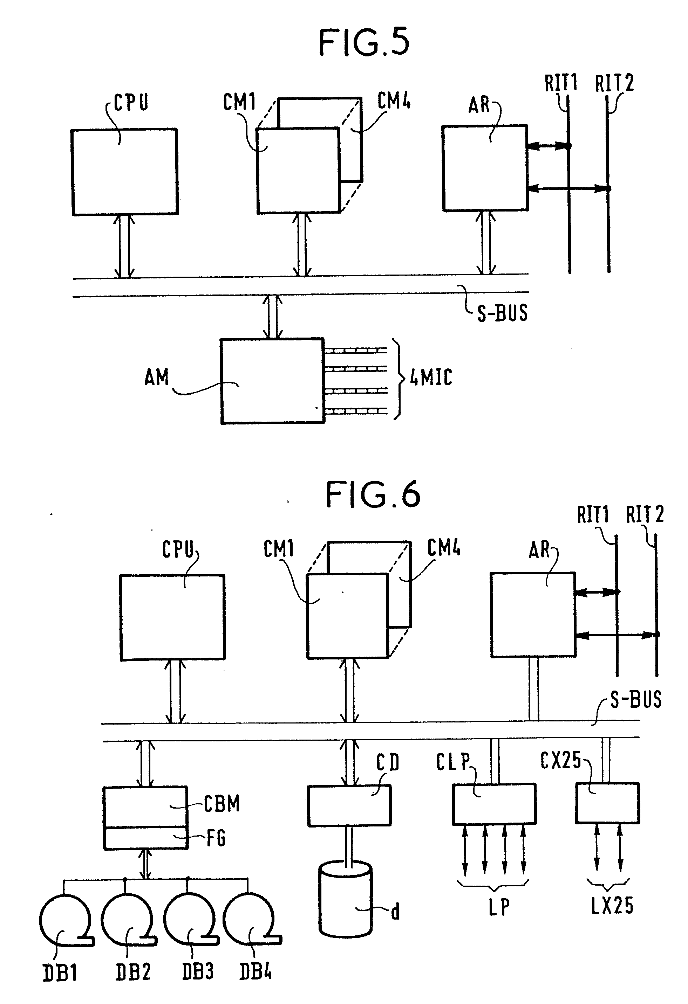

Une unité de commande UC est représenté schématiquement sur la figure 5.

Une unité de commande UC comporte les organes, reliés à un bus système S-BUS:

— une carte microprocesseur CPU,
— des cartes mémoires telles $CM_1$ à $CM_4$,
— une carte coupleur AR avec les liaisons $RIT_1$ et $RIT_2$,
— une carte coupleur AM avec les quatre liaisons multiplex qui desservent un groupe d'unités de commande GUC.

Les cartes CPU, AR, AM et le bus S-BUS sont décrits dans la demande de brevet citée plus haut.

Une unité de commande de périphérique UCP représentée schématiquement sur la figure 6 a une architecture analogue à celle des unités de commande UC, et elle comporte des coupleurs de périphériques tels que:

— Coupleur de bandes magnétiques CBM associé à une logique de formatage FG qui pilote quatre dérouleurs $DB_1$ à $DB_4$.
— Coupleur CD de disque d.
— Coupleur programmable de liaisons de données CLP gérant par exemple quatre liaisons à double sens LP exploitables séparément en mode synchrone ou asynchrone.
— Un coupleur CX25 de liaisons LX25 en procédure X25 définie par le CCITT.

Dans cette application les unités de commande de périphérique UCP ne sont pas reliées au réseau de connexion (pas de coupleur AM).

**0 075 780**

Un microprocesseur a accès au bus système S-BUS et à un bus résident, non représenté, pour la gestion des ressources implantées sur la carte microprocesseur CPU: Mémoire morte contenant le logiciel d'initialisation, mémoire vive, registres, temporisation. Ce microprocesseur est par exemple le circuit 8086 de la société INTEL.

Le logiciel est réparti de par la nature du système. Il est organisé en machines logiques, qui sont dessous-ensembles du logiciel vus comme des unités de commande indépendantes, ne communiquant avec l'environnement que par échanges de messages. Les machines logiques correspondent à des fonctions logiquement indépendantes: traitement d'appels téléphoniques, gestion de fichiers, interprétation de commandes opérateur, gestion de l'heure, . . .

L'ensemble de commande est de ce fait remplacé — du point de vue de l'utilisateur — par un réseau de machines logiques. Cette généralisation de l'architecture du matériel est motivée par deux considérations:

— La communication par messages existe nécessairement entre unités de commande puisque celles-ci ne disposent pas de mémoire commune,
— On a distingué machine logique et machine physique car, pour des raisons économiques, on est amené à regrouper sur une unité de commande plusieurs fonctions indépendantes pour utiliser au maximum le volume mémoire et la puissance de calcul. Les fonctions sont regroupées à la génération du système.

Certaines machines logiques peuvent être répétées dans plusieurs microprocesseurs. Par exemple, il existe 1 à 32 machines logiques de traitement d'appels téléphoniques gérant chacune un certain nombre d'abonnés et de circuits vers d'autres centraux. On peut ainsi accroître la capacité de l'autocommutateur par adjonction d'unités de commande supplémentaires.

L'adressage des machines logiques est fait par nom plutôt que par adresse physique. L'envoi d'un message à une machine logique s'effectue de la même manière, que le destinataire soit dans la même unité de commande ou dans une autre. De cette manière, les reconfigurations sont transparentes à la plupart des programmes.

Les machines logiques ont les caractéristiques suivantes:

— Ce sont des unités d'édition de lien et de chargement;
— Ce sont des ensembles de tâches (processus asynchrones),
— les messages sont adressés à des tâches dans les machines logiques,
— A chaque tâche sont associées deux files d'attente de messages: une file de requête et une file de réponses aux requêtes,
— Les tâches d'une même machine logique peuvent, elles aussi, communiquer entre elles par échanges de messages.

Le système d'exploitation est réalisé par un noyau résident qui est répété sur chaque unité de commande. On y trouve:

— Une séquence d'initialisation en mémoire morte capable de charge le reste du noyau résident, à l'initialisation.
— Un système de gestion des tâches et des échanges qui constitue le système d'exploitation. Il est lui-même constitué de deux sous-ensembles:
— un ensemble de services assurant la gestion des échanges, la gestion de la mémoire, la gestion des tâches. Cet ensemble comprend des primitives appelées par les machines logiques:
— envoi de massages,
— attente de requêtes, de réponses,
— connexion d'une procédure à une interruption (une telle procédure communique par messages avec les autres tâches de la machine logique à laquelle elle appartient),
— lecture d'informations diverses: no de tâche courante, heure . . .
— une machine logique de supervision incluse systématiquement dans chaque microprocesseur au démarrage. C'est elle qui rend les services liés à la gestion du microprocesseur, en particulier:
— charger une machine logique dans l'unité de commande et l'activer,
— indiquer où se trouvent les machines logiques implantées dans les autres microprocesseurs,
— supprimer une machine logique,
— redémarrer l'unité de commande,
— mettre à jour son horloge.

Par ailleurs, la machine logique de supervision assure des fonctions de test et de défense de l'unité de commande, de gestion de données et d'aide à la mise au point.

La répartition du logiciel en machines logiques et en tâches qui peuvent communiquer entre elles par messages, le destinataire étant reconnu par un code d'identification (numéro de machine logique,

6

**0 075 780**

numéro de tâche) indépendant de l'implantation physique, permet de configurer le système au départ, et de le reconfigurer après une modification ou en cas de panne d'une unité de commande.

Pour cela l'implantation des machines logiques est pilotée par une machine logique de gestion du réseau de commande, MLR, le réseau de commande étant constitué par l'ensemble de commande, les liaisons point à point $RIT_1$ et $RIT_2$, et les distributeurs $DR_1$ et $DR_2$. Pour connaître l'étant du système et commander les reconfigurations, la machine logique de gestion du réseau de commande interroge périodiquement tous les microprocesseurs. Dans chaque microprocesseur est implantée un tâche de maintenance qui effectue des tests internes et indique à la machine logique de gestion MLR l'étant du microprocesseur.

L'ensemble du logiciel est stocké sur un disque dupliqué pour des raisons de sécurité. Les deux disques sont gérés par des microprocesseurs distincts. Au moment de l'initialisation, les séquences d'initialisation des deux microprocesseurs avec disque décident, par échange de message temporisé, lequel doit démarrer en devenant le microprocesseur maître.La séquence d'initialisation de ce dernier charge:

— le système de gestion des tâches et des échanges,
— une machine logique assurant la gestion des fichiers,
— la machine logique de gestion du réseau de commande.

La machine logique de gestion du réseau de commande interroge les séquences d'initialisation des autres microprocesseurs pour déterminer ceux qui sont présents, constitue une carte du réseau et alloue les machines logiques aux microprocesseurs.

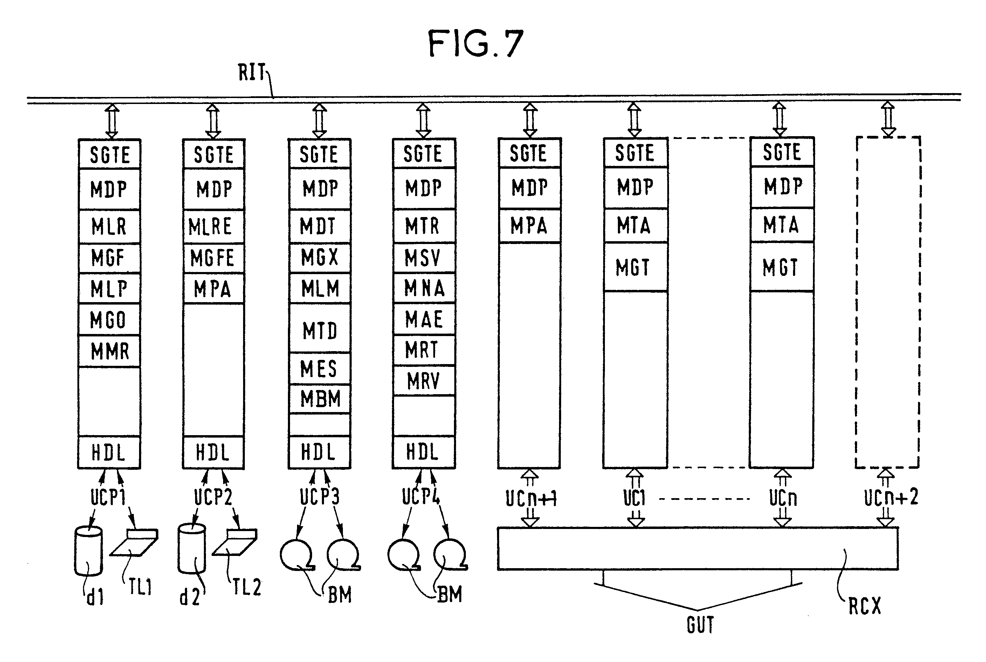

On a représenté à la figure 7 une implantation concernant un central téléphonique moyen, et la configuration du logiciel en fonctionnement normal. On a représente quatre unités de commande de périphérique, UCP1 à UCP4, dont deux avec disque $d_1$, $d_2$ et terminal de dialogue $TL_1$, $TL_2$, et deux avec chacune deux dérouleurs de bande BM. Il y a n unités de commande UC pour le traitement des appels,une unité de commande de secours UC $n+1$, et éventuellement une seconde unité de commande de secours UC $n+2$. La configuration représentée comporte le système de gestion des tâches et des échanges déjà cité, et désigné par SGTE, ainsi que les machines logiques suivantes:

— MDP: machine logique de manipulation de données physiques, qui gère l'accès aux tables internes d'un microprocesseur par les différentes machines logiques de ce microprocesseur.

— MLP: machine logique de conversion logique-physique, implantée dans l'unité de commande de périphérique maître, permet la conversion des données logiques sur disques en données utilisées par les programmes, par exemple les programmes d'exploitation.

— MLR: machine logique de gestion du réseau de commande, implantée sur l'unité de commande de périphérique maître, UCP1.

— MLRE: machine logique de gestion du réseau de commande, de même type que la précédente, implantée sur l'unité de commande de périphérique esclave UCP2 et qui permet de superviser l'unité de commande de périphérique maître.

— MGF: machines logiques de gestion des fichiers disques,
— MGFE: respectivement maître et esclave.

— MPA: machines logique de chargement des programmes amovibles.
Ces programmes qui concernent des commandes opérateur, sont stockés sur disque et ils peuvent être chargés sur un microprocesseur quelconque, par exemple sur l'unité de commande de secours UC $n+1$ lorsque celle-ci n'est pas utilisée pour le traitement d'appels.

— MMR: machine logique moniteur, qui gère l'enchaînement des programmes d'exploitation.

— MGO: machine logique de gestion des terminaux opérateurs.

— MGT: machine logique de gestion des terminaux T, implantée dans une unité de commande UC, gère un certain nombre de groupes d'unités de terminaux constituant un super-groupe.

— MTA: machine logique de traitement d'appel, qui comporte en outre des tâches d'interface, notamment avec les machines MTR, MSV, MOT, MLM.

— MTR: machine logique de traduction centralisée comportant les tables trop importantes pour être implantées dans toutes les machines MTA.

— MSV: machine logique de sauvegarde permettant de ne pas perdre les communications en cours en cas de panne d'une unité de commande UC et basculement sur l'unité de commande de secours.

— MNA: machine logiques de traitement de service (numérotation
— MAE: abrégée, appel enregistré, renvoi temporaire, réveil).
— MRT:
— MRV:

7

— MGX: machine logique de gestion du réseau de connexion, des liaisons multiplex et des bases de temps.
— MOT: machine logique d'observation de trafic
— MLM: machine logique de maintenance centralisant la signalisation des défauts et la gestion des alarmes.
— MES: machine logique pilote des essais (systématiques. et à la demande).
— MBM: machine logique de gestion de bandes magnétiques.
— HDL: machines logiques de gestion des accès aux périphériques (Handler).
— MTD: Machine logique de gestion de lognes de transmission données.

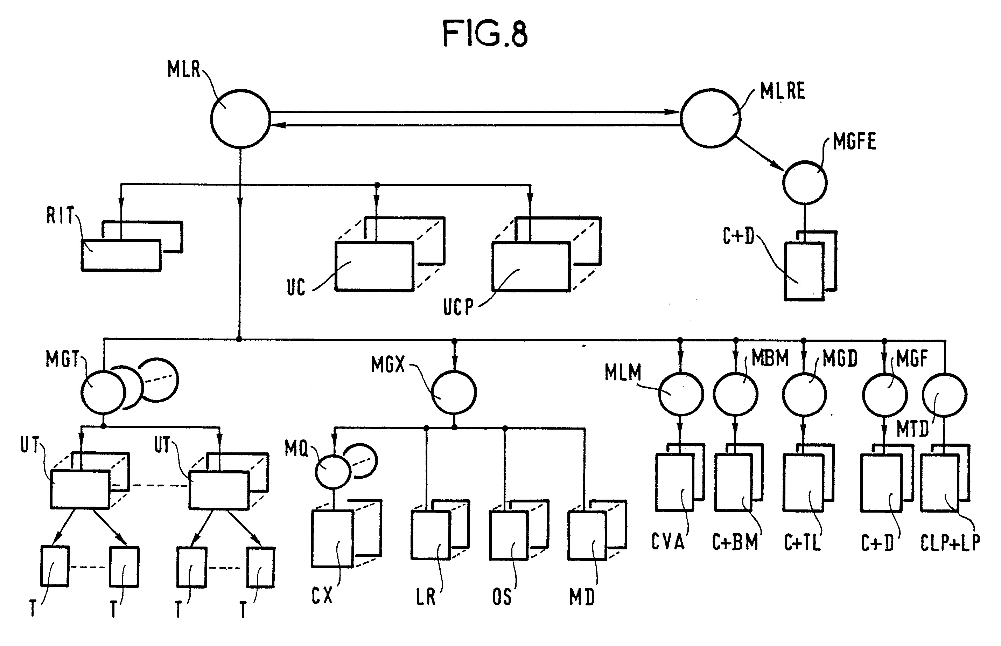

La défense représentée figure 8, est organisée en trois niveaux:

— La défense du réseau de commande, réalisée au niveau des microprocesseurs minus d'un disque (UCP$_1$ et UCP$_2$), par les machines de gestion MLR et MLRE.
— La défense du réseau de parole, au niveau d'une unité de commande UC ou d'une unité de commande de périphérique UCP dans laquelle est implantée la machine logique MGX, et au niveau d'unités de commande comportant les autres machines ayant la charge de la gestion des unités de terminaux et les coupleurs de périphériques (MGT, MBM, MGO, MGF, MLM, MTD).
— La défense des unités de terminaux UT et des coupleurs des unités de commande de périphériques, au niveau des microprocesseurs de ces unités.

Cette architecture représentée à la figure 8, montre les organes redondants permettant une reconfiguration, et les machines logiques gestionnaires.
Dans le système suivant l'invention, les équipements sont répartis en deux ensembles:

— Un ensemble de blocs fonctionnels susceptibles d'être isolés (blocs de sécurité).

Chacun des blocs fonctionnels suivants constitue un bloc de sécurité: unité de commande de périphérique UCP, unité de commande UC, chaque liaison RIT, chaque commutateur CX, chaque liaison multiplex, chaque unité de terminaux UT, chaque terminal T, chaque périphéque BM, d, TL, liaison de données LD.

— Les ensembles fonctionnels non susceptibles d'être isolés et utilisés en redondance: oscillateurs OS1 à OS3, modules de distribution de signaux (MD), convertisseurs d'alimentation CVA, dans le cas où ceux-ci sont dupliqués.

La description qui a été faite du système et du schéma général de la défense permet de comprendre comment sont réalisées les fonctions déjà citées de détection, défense, localisation des fautes, signalisation, aide à la réparation. On retrouve pour les fonctions une répartition en trois niveaux: local I, -gestionnaire II, central III, comme représenté figure 9.

— Les tests de détection de panne sont décentralisés dans tous les microprocesseurs du système et les coupleurs de périphériques, au niveau local.
— La défense se situe à deux niveaux:
    — au niveau local I, c'est-à-dire au niveau du microprocesseur qui a détecté une faute, une action est réalisée qui concerne la suite à donner au traitement qui a donné lieu à la faute: reprise, abandon, réinitialisation du matériel, libération des moyens utilisés. Pour cela on distingue deux types de fautes:
    — les fautes récupérables, c'est-à-dire celles pour lesquelles la défense locale entreprend une reprise (RESET ou RETRY) et qui deviennent des fautes récupérées, en cas de réussite, ou des fautes mortelles, en cas d'échec (nombre de reprises supérieures à un seuil):
    — les fautes non récupérables, pour lesquelles la défense locale libère les ressources utilisées par le test: cas du test actif de communication, ou test passif de connexion.
        — au niveau du gestionnaire II, est traité l'aspect système de la défense: mises hors service des blocs de sécurité, reconfiguration. Le gestionnaire est informé des actions entreprises par la défense locale, donc du type de faute:
    — par messages d'évènements spontanés pour les périphériques informatiques et leurs coupleurs,
    — par les réponses ou absence de réponse aux messages de scrutation (polling) émis par la défense locale, pour les organes de commande. Ce choix s'explique, par le fait qu'on ne peut pas se fier à un message de faute émis spontanément par un organe de commande en panne.

Le gestionnaire tient à jour des tables d'état des équipements gérés, et des compteurs de fautes récupérées lui permettant de décider l'isolement des équipements en cas de dépassement de seuil du nombre de fautes.

— la localisation permet d'identifier le sous-ensemble en faute, nommé bloc de réparation, constitué d'un petit nombre de cartes de circuits imprimés, le plus souvent une seule carte. Lorsqu'un bloc de réparation coïncide avec un bloc de sécurité, il suffit de traduire l'adresse fonctionnelle en adresse géographique (travée, bâti, alvéole rainure). Dans les autres cas, la machine logique de gestion du bloc de sécurité concerné utilise des résultats de tests

— soit par recoupement de plusieurs tests,

— soit par lancements de tests complémentaires.

— Le niveau central III regroupe la signalisation et la gestion des alarmes:

    — la signalisation: la machine logique de maintenance MLM est informée, par les gestionnaires des fautes détectées et des actions de défense réalisées, et elle provoque l'édition de messages de faute sur téléimprimeur et de clichés de faute sur bande magnétique.

Pour cela, la machine logique de maintenance MLM utilise une table de description topologique de tous les équipements. Le tableau 1 montre les principaux messages des machines gestionnaires à la machine logique de maintenance MLM, et les principaux messages émis par elle concernant la signalisation et les actions de défense prises au niveau des machines logiques gestionnaires. Tâche particulière TGA de gestion des alarmes et d'un panneau d'alarmes.

Le panneau d'alarme regroupe des indicateurs lumineux indiquant le degré d'urgence de l'alarme et l'identité de l'équipement en faute.

Pour les fautes dans les blocs de sécurité, la tâche TGA utilise les données fournies par le gestionnaire. La remise à zéro des indicateurs est effectuée suite aux tests de validation de réparation.

Pour les modules de distribution de signaux MD, les changements d'états sont signalés à la tâche TGA par la machine logique de gestion du réseau de connexion MGX. Enfin pour les convertisseurs et climatiseurs, les contacts de signalisation de ces appareils sont observés cycliquement par un coupleur spécial CAC qui dialogue avec la tâche TGA.

D'autre part l'aide à la réparation fait appel d'une part à des programmes amovibles PA de maintenance chargés en machine logique de chargement de programmes amovibles, MPA à la demande d'un opérateur, et activés par la machine logique moniteur MMR, et d'autre part à des programmes de test PDT chargés en mémoire d'un microprocesseur destinataire, activés par la machine logique de gestion du réseau de commande MLR.

Tableau 1

| | Alarmes distributeurs (conv.) | Machine logique de maintenance | Positionnement d'alarmes | d'alarmes Panneau |
|---|---|---|---|---|
| MGT | Défaut UT, T | | Remise à zéro d'alarme | |
| MLR | Défaut UC, RIT | | Mise en faute BS, suite à une alarme | MGF MLR MGX MGT |
| MGX | Défaut LR, commutateur | | | |
| MGF | Défaut disque | | Edition message d'alarme | MGO |
| MBM | Défaut station BM | | Edition message de faute, d'anomalie | MGO |
| MGO | Défaut console TTY | | Accès aux tables de description Topologique de la Configuration | MGO |
| MGX | Défaut canal (non ventilé) | | Edition du BS ou BR en panne | MGO |
| MGO | Demande d'exécution d'un P. A. maintenance ou d'un PDT | | Demande de chargement, activ. PDT en UC | MLR |
| MGO | Inhibition, autorisation Clichés/BM | | Compte rendu d'exécution PDT ou PA | MGO |
| | | | Rangement clichés de faute/BM | MBM |

0 075 780

Dans la figure 9, le bloc inférieur, messages d'anomalies MAN, montre la détection et la défense associée aux anomalies détectées par les programmes utilisateurs. Les messages d'anomalie sont transmis à la machine logique de gestion du réseau de commande qui les filtre avant signalisation.

Une détection d'anomalie par un programme autre qu'un programme de maintenance donne lieu à une action de défense, définie dans le programme (reprise, RESET), Un message d'anomalie est ensuite acheminé vers la machine logique de gestion du réseau de commande MLR précisant l'identification du programme ayant détecté l'anomalie et le contexte.

Les principaux moyens permettant la détection des pannes vont être décrits à titre d'exemple.

Les dispositifs de contrôle implantés dans le matériel assurent une première couverture de surveillance: les contrôles de parités (mémoires vives des unités de commande UC) et de redondance cyclique CRC des chemins principaux d'informations: liaisons RIT, coupleurs AM, coupleurs disque, ... permettent d'éviter la propagation des fautes dans le système, grâce à leurs temps de réponse rapide (quelques dizaines de microsecondes).

Des »chiens de garde« contrôlent les durées d'occupation des chemins principaux d'informations et libèrent ceux-ci en cas de débordement.

Les tests exécutés par logiciel sont implantés en mémoire des microprocesseurs: tests d'initialisation, en partie en mémoire PROM, tests périodiques ou systématiques en programmes résidents, tests à la demande des machines gestionnaires ou à la demande d'un opérateur, par programmes résidents ou chargés à partir du disque maître.

## Tests du réseau de commande

— Tests d'initialisation

La séquence d'initialisation SI de chaque microprocesseur contient un contrôle simplifié de l'ensemble carte microprocesseur CPU, mémoire, coupleur AR rebouclé, test organisé pour la localisation de la carte en panne.

Le coupleur AM est testé en rebouclant des informations sur un intervalle de temps de chaque canal de commande.

Les liaisons RIT sont testées par envois de messages sur l'une d'elle à tous les processeurs actifs, puis sur l'autre liaison.

— Tests périodiques
  — scrutation: les microprocesseurs sont interrogés périodiquement par la machine logique de gestion du réseau de commande MLR.
  — Test d'éveil (tests de parité des programmes en mémoire PROM) Ces tests sont exécutés par le système de gestion des tâches et des échanges SGTE.

— Tests à la demande

Ceux-ci sont chargés à partir du disque, à la demande de l'opérateur, puis transférés et activés dans le microprocesseur désigné, préalablement bloqué manuellement.

La machine logique de gestion du réseau de commande MLR assure le contrôle d'exécution, par temporisation.

## Tests du réseau de connexion

— Tests d'initialisation

Un test d'initialisation (en mémoire PROM de chaque marqueur) contenant le contrôle du micriprocesseur de la carte CPU, de sa mémoire RAM, des cartes coupleurs AR en rebouclé, constitue l'amorce du logiciel du marqueur MQ.

— Tests à l'utilisation

Les machines logiques de traitement d'appel MTA commandent, en phase de décrochage du demandeur, un contrôle actif du chemin de conversation incluant le réseau.

— Tests périodiques

Intégrés dans les marqueurs

— test périodique d'éveil du marqueur.

— test passif des connexions établies dans un quart de plan du réseau de connexion: celui-ci effectue la comparaison, en entrée et sortie du réseau de connexion.

Intégrés dans les machines logiques de gestion des terminaux MGT.

— scrutation périodique des unités de terminaux UT, à travers le réseau de connexion.
— répartition des différents groupes d'unités de terminaux GUT sur les plans et les liaison D1 à Dr de distribution de signaux.

— Tests à la demande

Marqueur:

— test de liaison RIT et coupleur AR en rebouclé.
— Test de conformité d'un commutateur élémentaire.
— Test actif d'un chemin déterminé, obtenu par rebouclages dans deux unités de terminaux UT quelconques pour les intervalles de temps de conversations, ou par rebeuclages internes dans un coupleur AM et une unité de terminaux UT, pour les intervalles de temps des canaux de commande.

Le test préventif des chemins pilotés par la machine logique de gestion de réseau de connexion MGX fait appel aux machines logiques de gestion des terminaux MGT pour les commandes de rebouclage et de bouclages internes des coupleurs AM et unités de terminaux UT.

— Test de localisation

A la suite d'une détection de panne par un test préventif sur un chemin comprenant plusieurs blocs de sécurité, la machine logique de gestion du réseau de connexion MGX active des tests de lever de doute (ce afin de déterminer le bloc de sécurité à mettre hors service: CB ou UT), en effectuant des tests actifs sur des »parties« du chemin défaillant.

— Test d'un commutateur

Le test, par un opérateur, d'un commutateur hors service, se traduit par l'exécution des tests de la carte microprocesseur, des mémoires, ainsi que des tests actifs des mémoires tampon équipant celui-ci; des tests sont résidents en mémoire PROM des marqueurs.


Unités de terminaux UT

— Tests d'initialisation

Intégrés en unité de terminaux UT

— des tests de parité du contenu de la mémoire PROM fonctionelle, de la mémoire vive RAM, exécutés dans l'amorce de chaque unité de terminaux UT, permettent un contrôle du microprocesseur.
— les ordres émis par la machine logique de gestion des terminaux MGT sont contrôlés en conformité par les unités de terminaux.

Intégrés en machine logique de gestion des terminaux MGT

— à l'initialisation d'une unité de terminaux UT, la machine logique MGT vérifie la capacité de celle-ci à dialoguer sur les quatre canaux de commande (un sur chaque liaison multiplex), en commandant des basculements du canal utilisé.

— Tests à l'utilisation

— les contrôles actifs de communication (avec rebouclage interne en unités de terminaux) effectués en phase de décrochage du demandé, vérifient le bon fonctionnement du chemin de données (codeur/décodeur, AMPLIS, . . .)
— Tests périodiques: tests d'éveil en mémoire PROM des unités de terminaux

— Tests à la demande:

**0 075 780**

de la machine logique d'essais gérant les essais de terminaux, MES. Ces essais sont effectués par des robots localisés dans des unités de terminaux particulières.

Disque et coupleur (gérés par la machine logique de gestion des fichiers disques, MGF).

— Tests d'initialisation

— programme amovible lancé par l'opérateur, sur le disque (esclave) remis en service: ce test vérifie l'écriture et la lecture de profils complémentaires sur toute la capacité du disque, avant de procéder à la duplication du disque maître.
— test des états de disque positionnés dans le coupleur.

— Tests à la demande de l'opérateur: tests de cohérence entre les deux disques.
— Dérouleur de bande BM + coupleur (gérés par la machine logique de gestion de bandes magnétiques, MBH).

— Test d'initialisation

Test des états d'un dérouleur de bande, fourni par le coupleur du dérouleur.
— Test à la demande de l'opérateur.
Programmable amovible de test de localisation.
Terminal de dialogue TL + Coupleur (gérés par la machine de gestion des terminaux opérateurs MGO).

— test d'initialisation

Test des états d'un terminal de dialogue TL, fourni par le coupleur de ce terminal.
— Test à la demande de l'opérateur.
Programme amovible de test de localisation.

### Détection d'anomalies du logiciel

— Par les programmes opérationnels
Ceux-ci procèdent à des contrôles de cohérence d'états, d'informations diverses, comme par exemple:

— message en provenance d'un équipement ou d'une machine logique inconnus du système,
— état non conforme d'un équipement,
— reprises réussies, . . .

— Par les programmes de test préventif du logiciel
Ceux-ci s'appliquent aux:
— Programmes,
— données et aux fichiers.

Ces contrôles se font:

— par comparaison des tables et des fichiers avec leurs images en disque,
— par comparaison des tables et des fichiers des disques maître et esclave entre eux,
— par rapport au matériel: revue de conformité des états d'équipements.

Un exemple d'action par exemple par la machine logique de gestion du réseau de connexion MGX est donné ci-après, dans les cas de détection de défauts:

— Faute signalée par un marqueur en réponse la scrutation d'acquisition des résultats de tests.
— la faute concerne le test de bouclage liaison RIT/coupleur AR: la machine logique de gestion du réseau de connexion MGX avertit la machine logique de gestion du réseau de commande MLR.
— Dans les autres cas, la machine logique MGX exécute des tests de levée de doute, isole le bloc de sécurité en cause, puis avertit les machines logiques de gestion de terminaux MGT dont le canal de commande peut être concerné par le défaut.
— faute signalée par la machine logique de traitement d'appel, MTA, ou la machine logique de gestion des terminaux MGT à la machine-logique de gestion du réseau de connexion MGX par des messages relatifs aux défauts détectés par les tests qu'elles ont exécutés, et impliquant le réseau;

13

la machine MGX procède alors à la détermination du bloc de sécurité concerné par corrélation d'indices multiples; cela permet d'isoler une liaison multiplex (non réponse sur un canal de un ou plusieurs groupes d'unités de terminaux GUT) ou un quart de plan (défauts signalés par les contrôles actifs de communication et par les tests intégrés dans les marqueurs MQ).

Le système décrit permet de tirer le meilleur parti des avantages d'un autocommutateur modulaire à commande répartie. Les pannes et anomalies sont détectées le plus près possible de leur origine. La défense opère au niveau local et ne fait appel au niveau supérieur que lorsqu'il y a une incidence extérieure à un organe.

La défense a la même organisation fonctionnelle que le système et utilise les mêmes liaisons. Elle agit sur la reconfiguration de sous-ensembles fonctionnels (les blocs de sécurité).

## Revendications

1. Dispositif de défense d'un autocommutateur à commande répartie comportant un réseau de connection temporel constitué de commutateurs (CX), des groupes d'unités de terminaux (GUT) dans lesquels chaque unité de terminaux (UT) comportant des terminaux (T)est reliée au réseau de connexion par des liaisons multiplex et comporte un microprocesseur de gestion des terminaux, des périphériques tels que disques (d1, d2), terminaux de dialogue (TL1 à TL4) dérouleurs de bandes magnétiques (BM), liaisons de données (LD) par l'intermédiaire de modems (MOD), un ensemble de commande comportant des unités de commande (UC) banalisées et des unités de commande de périphériques (UCP), reliées entre elles par deux liaisons point à point ($RIT_1$, $RIT_2$), les unités de commande (UC) étant reliées au réseau de connexion par des liaisons multiplex, et des marqueurs (MQ) pour la commande du réseau de connexion, chaque unité de commande, chaque unité de commande de périphérique et chaque marqueur comportant un microprocesseur, chaque unité de commande de périphérique, chaque unité de commande, chaque liaison point à point, chaque commutateur, chaque liaison multiplex, chaque unité de terminaux, chaque terminal et chaque périphérique constituant un bloc de décurité susceptible d'être isolé séparément, caractérisé par le fait qu'il est organisé en 3 niveaux:

— un premier niveau (I) ayant des moyens de défense dans chaque microprocesseur permettant la détection des pannes et une prise de décision concernant le traitement en cours,
— un deuxième niveau (II) ayant des moyens de gestion des blocs de sécurité assurant le basculement d'un bloc de sécurité sur un autre, et la reconfiguration des liaisons,
— un troisième niveau (III) ayant des moyens de gestion des microprocesseurs de l'ensemble de commande et des marqueurs, et de deux liaisons point à point, lesdits moyens comportant deux unités de commande de périphérique identiques ayant en mémoire de masse tout le logiciel de l'autocommutateur.

2. Dispositif de défense suivant la revendication 1 dans lequel le logiciel est organisé en machines logiques reconfigurables gérées par les moyens de gestion troisième niveau, caractérisé par le fait que les fonctions de signalisation des pannes centralisées dans une machine logique de maintenance (MLM) qui reçoit des messages des moyens de gestion du deuxième niveau, et émet des messages d'édition de la signalisation.

3. Dispositif de défense suivant la revendication 2, caractérisé par le fait que le premier niveau comporte: des dispositifs de détection rapide, des tests d'initialisation en mémoire PROM pour le contrôle des circuits du microprocesseur, de sa mémoire, de son interface avec les liaisons point à point, et des tâches de maintenance comportant des logiciels de test activés soit périodiquement par le microprocesseur soit à la demande du deuxième niveau.

4. Dispositif de défense suivant la revendication 3, caractérisé en ce que le deuxième niveau est formé de machines logiques dialoguant par messages avec les tâches de maintenance des microprocesseurs du premier niveau et avec la machine logique de maintenance (MLM).

5. Dispositif suivant la revendication 4, caractérisé par le fait que les trois niveaux dialoguent entre et avec la machine logique de maintenance par les liaisons point à point et les liaisons multiplex.

6. Dispositif de défense suivant la revendication 4, caractérisé par le fait que le deuxième niveau comporte une machine logique de gestion du réseau de connexion (MGX) gérant des blocs de sécurité formés chacun d'un commutateur du réseau de connexion et des blocs de sécurité formés d'une liaison multiplex.

7. Dispositif de défense suivant la revendication 4 dans lequel une fonction de localisation permet d'identifier un bloc de réparation responsable d'une faute, caractérisé par le fait que les machines du deuxième niveau comportent des tâches de localisation opérant sur trois types de résultats de tests,

— résultats de tests de détection de faute,
— résultants de tests multiples permettant une localisation par recoupement,

— résultats de tests complémentaires activés par une machine du deuxième niveau pour lever un doute dans la localisation.

8. Dispositif suivant la revendication 7 comportant un panneau de signalisation d'alarmes provenant soit de fautes de blocs de sécurité gérés par les machines de deuxième niveau, soit de pannes sur des convertisseurs d'alimentation de l'autocommutateur, caractérisé par le fait que le panneau est géré par une tâche (TGA), de la machine logique de maintenance (MLM), recevant les informations d'alarme des machines logiques du deuxième niveau et d'un coupleur spécialisé observant des contacts de signalisation inclus dans les convertisseurs.

**Patentansprüche**

1. Sicherungsvorrichtung für eine Selbstwählanlage mit verteilter Steuerung, mit einem aus Schaltern (CX) aufgebauten Zeitschalt-Verbindungsnetz, mit Gruppen von Endgeräteeinheiten (GUT), wobei jede Endgeräteeinheit (UT), die Endgeräte (T) enthält, an das Vermittlungsnetz über Multiplexverbindungen angeschlossen ist und einen Mikroprozessor zur Überwachung der Endgeräte, der peripheren Geräte wie Platten (d1, d2), Dialoggeräte (TL1 bis TL4), Bandgeräte (BM), Datenverbindungen (LD) über Modems (MOD) aufweist, wobei ein Steuerkomplex allgemein verwendbare Steuereinheiten (UC) und Steuereinheiten für Periphergeräte (UCP) enthält, die untereinander über zwei Punkt-zu-Punkt-Verbindungen (RIT$_1$, RIT$_2$) verbunden sind und die Steuereinheiten (UC) an das Vermittlungsnetz über Multiplexverbindungen angeschlossen sind, und wobei Markierer (MQ) zur Steuerung des Vermittlungsnetzes vorgesehen sind, wobei jede Steuereinheit, jede Periphergeräte-Steuereinheit und jeder Markierer einen Mikroprozessor aufweist und jede Periphergeräte-Steuereinheit, jede Steuereinheit, jede Punkt-zu-Punkt-Verbindung, jeder Schalter, jede Multiplexverbindung, jede Endgeräteeinheit, jedes Endgerät und jedes Periphergerät einen Sicherheitsblock bildet, der separat isoliert werden kann, dadurch gekennzeichnet, daß die Vorrichtung in drei Ebenen organisiert ist, nämlich

— einer ersten Ebene (I), die Sicherungsmittel in jedem Mikroprozessor besitzt und die Entdeckung von Pannen ermöglicht und eine Entscheidung über die gerade ablaufenden Vorgänge herbeiführt,
— einer zweiten Ebene (II), die Mittel zur Verwaltung der Sicherheitsblöcke besitzt und die Umschaltung von einem Sicherheitsblock auf einen anderen sowie die Neuanordnung der Verbindungen sicherstellt,
— einer dritten Ebene (III), die Mittel zur Verwaltung der Mikroprozessoren für den Steuerkomplex und die Markierer sowie die beiden Punkt-zu-Punkt-Verbindungen besitzt, wobei diese Mittel zwei einander gleiche Periphergeräte-Steuereinheiten aufweisen, die im Massenspeicher die ganze Software der Selbstwählanlage gespeichert halten.

2. Sicherungsvorrichtung nach Anspruch 1, in der die Software in Form logischer Maschinen organisiert ist, die neu angeordnet werden können und von den Mitteln zur Verwaltung der dritten Ebene verwaltet werden, dadurch gekennzeichnet, daß die Funktionen der Pannenmeldung in einer logischen Wartungsmaschine (MLM) zentralisiert sind, die die Nachrichten von den Verwaltungsmitteln der zweiten Ebene zugeführt erhält und Nachrichten betreffend die Ausgabe der Signalisation aussendet.

3. Sicherungsvorrichtung nach Anspruch 2, dadurch gekennzeichnet, daß die erste Ebene Einrichtungen zur schnellen Entdeckung, Starttests im Arbeitsspeicher für die Kontrolle der Schaltkreise des Mikroprozessors, seines Speichers, seiner Schnittstelle mit den Punkt-zu-Punkt-Verbindungen und der Wartungsaufgaben aufweist, die Testsoftware enthält, welche entweder periodisch vom Mikroprozessor oder auf Wunsch der zweiten Ebene aktiviert wird.

4. Sicherungsvorrichtung nach Anspruch 3, dadurch gekennzeichnet, daß die zweite Ebene von logischen Maschinen gebildet wird, die über Nachrichten mit den Wartungsaufgaben der Mikroprozessoren der ersten Ebene und der logischen Wartungsmaschine (MLM) miteinander verkehren.

5. Vorrichtung nach Anspruch 4, dadurch gekennzeichnet, daß die drei Ebenen untereinander und mit der logischen Wartungsmaschine über die Punkt-zu-Punkt-Verbindungen und die Multiplexverbindungen Nachrichten austauschen.

6. Sicherungsvorrichtung nach Anspruch 4, dadurch gekennzeichnet, daß die zweite Ebene eine logische Maschine zur Verwaltung des Vermittlungsnetzes (MGX) aufweist, die Sicherheitsblocks, welche je aus einem Schalter des Vermittlungsnetzes gebildet werden, und Sicherheitsblocks verwaltet, welche von einer Multiplexverbindung gebildet werden.

7. Sicherungsvorrichtung nach Anspruch 4, in der eine Lokalisierfunktion einen Reparaturblock zu identifizieren vermag, der für einen Fehler verantwortlich ist, dadurch gekennzeichnet, daß die Maschinen der zweiten Ebene Lokalisieraufgaben umfassen, die auf drei Typen von Testresultaten ansprechen, nämlich

— Testresultate betreffend eine Fehlerentdeckung,
— Resultate von Vielfachtests, die eine Lokalisierung durch Überschneidung ermöglichen,
— Resultate ergänzender Tests, die von einer Maschine der zweiten Ebene aktiviert werden, um einen Zweifel betreffend die Lokalisierung zu beheben.

8. Vorrichtung nach Anspruch 7 mit einer Anzeigetafel zur Signalisierung eines Alarms, der entweder von Fehlern von Sicherheitsblocks stammt, die von den Maschinen der zweiten Ebene verwaltet werden, oder von Pannen in den Stromversorgungswandlern der Selbstwählanlage, dadurch gekennzeichnet, daß die Anzeigetafel von einer Aufgabe (TGA) der logischen Wartungsmaschine (MLM) verwaltet wird, die die Alarminformationen der logischen Maschinen der zweiten Ebene und eines spezialisierten Kopplers erhält, der die in den Wandlern enthaltenen Signalisierkontakte beobachtet.

## Claims

1. A defence system for a distributed control exchange having a time division switching network with switches (CX), groups of terminal units (GUT), in which each terminal unit (UT) comprising terminals (T) is connected to the switching network via multiplex links and comprises a microprocessor for handling the terminals, the peripheral means such as disks (d1, d2), the dialogue terminals (TL1 to TL4), the magnetic tape transports (BM), the data links (LD) via modems (MOD), a control assembly comprising interchangeable control units (UC) and control units for controlling the peripheral means (UCP), these control units being interconnected by two point-to-point links (RIT$_1$, RIT$_2$), the control units (UC) being connected to the switching network via multiplex links, the device further comprising markers (MQ) for controlling the switching network, each control unit, each unit for controlling peripheral means and each marker comprising a microprocessor, each unit for controlling peripheral means, each control unit, each point-to-point link, each switch, each multiplex link, each terminal unit, each terminal and each peripheral means constituting a security block capable of being independently isolated, characterized in that the device is organized on three levels:

— a first level (I) comprising defence means in each microprocessor for detecting faults and for taking decisions concerning the current processing,
— a second level (II) comprising means for managing said security blocks and for switching over from one block to another and re-arranging the links,
— a third level (III) comprising means for managing the microprocessors of the control assembly and of the markers, and of the two point-to-point links, these means comprising two identical control units for controlling peripheral means having all the software of the exchange in its mass memory.

2. A defence device according to claim 1, in which the software is organized in logical machines which can be re-arranged and which are managed by the third level management means, characterized in that the fault signalling functions are centralized in a logical maintenance machine (MLM) which receives messages from the second level management means and send out signallisation display messages.

3. A defence device according to claim 2, characterized in that the first level comprises rapid detection devices, start-up tests in a PROM memory for checking the circuits of the microprocessor, its memory, its interface with the point-to-point links, and the maintenance tasks including the test software which is activated either periodically by the microprocessor or at the request of the second level.

4. A defence device according to claim 3, characterized in that the second level is made of logical machines which exchange messages with the maintenance tasks of the microprocessors of the first level and with the logical maintenance machines (MLM).

5. A device according to claim 4, characterized in that the three levels exchange messages between themselves and with the logical maintenance machine via the point-to-point links and the multiplex links.

6. A defence device according to claim 4, characterized in that the second level comprises a logical machine for managing the switching network (MGX), managing security blocks which are each made of one switch of the switching network, and managing security blocks which are made of a multiplex link.

7. A defence device according to claim 4, in which a localisation function is conceived to identify a repair block responsible for a fault, characterized in that the machines of the second level comprise localisations tasks operating on three types of test results:

— fault detection test results,
— multiple test results enabling localisation by cross-checking,
— additional test results activated by a machine of the second level in order to remove any doubts about the localisation.

8. A device according to claim 7, comprising a display panel for displaying alarms which come either from faults of the security blocks managed by the machines of the second level or faults concerning power supply converters of the exchange, characterized in that the panel is managed by a task (IGA) of the logical maintenance machine (MLM) which receives alarm informations from the logical machines of the second level and from a specialized coupler which observes signalling contacts included in the converters.

FIG.1

# FIG.2

# FIG.3

# FIG.4

# FIG.9

# FIG.5

# FIG.6

# FIG.7

# FIG.8

0 075 780